Europäisches Patentamt

European Patent Office

Office européen des brevets

(19)

(11) Veröffentlichungsnummer: **0 005 860**
**B1**

(12) # EUROPÄISCHE PATENTSCHRIFT

(45) Veröffentlichungstag der Patentschrift:
**24.03.82**

(21) Anmeldenummer: **79101756.9**

(22) Anmeldetag: **02.06.79**

(51) Int. Cl.³: **C 03 B 35/00,** B 65 G 49/06

(54) **Vorrichtung zum automatischen Aushängen von an zangenförmigen Greifvorrichtungen aufgehängten Glasscheiben.**

(30) Priorität: **07.06.78 FR 7817026**

(43) Veröffentlichungstag der Anmeldung:
**12.12.79 Patentblatt 79/25**

(45) Bekanntmachung des Hinweises auf die Patenterteilung:
**24.03.82 Patentblatt 82/12**

(84) Benannte Vertragsstaaten:
**BE CH DE FR GB IT SE**

(56) Entgegenhaltungen:
**US-A-3 530 970**
**US-A-3 610 393**

(73) Patentinhaber: **SAINT-GOBAIN INDUSTRIES, 62, Bd Victor Hugo, F-92209 Neuilly sur Seine (FR)**

(84) Benannte Vertragsstaaten: **BE CH FR GB IT SE**

(73) Patentinhaber: **Vereinigte Glaswerke GmbH, Viktoriaallee 3-5, D-5100 Aachen (DE)**

(84) Benannte Vertragsstaaten: **DE**

(72) Erfinder: **Roth, Mario, Dipl.-Ing., Laurentiusstrasse 13, D-5100 Aachen (DE)**
Erfinder: **Pagel, Werner, Ing., Christian-Derichstrasse 4, D-5120 Herzogenrath (DE)**
Erfinder: **Rissmann, Heinz-Bernd, Vereinsstrasse 5-7, D-5100 Aachen (DE)**
Erfinder: **Happich, Karl-Christoph, Viktoriaallee 56, D-5100 Aachen (DE)**

(74) Vertreter: **Biermann, Wilhelm, Dr.-Ing., Compagnie de Saint-Gobain-Pont-A-Mousson Zweigniederlassung Deutschland Postfach 14 90 Oppenhoffallee 143, D-5100 Aachen (DE)**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

# Vorrichtung zum automatischen Aushängen von an zangenförmigen Greifvorrichtungen aufgehängten Glasscheiben

Die Erfindung betrifft eine Vorrichtung an einer Wärmebehandlungsanlage für Glasscheiben zum automatischen Aushängen einer an unter Schwerkraftwirkung sich schliessenden zangenförmigen Greifvorrichtungen vertikal aufgehängten heissen Glasscheibe aus den Greifvorrichtungen, mit einem die Glasscheibe anhebenden und auf eine Transportvorrichtung übergebenden Tragorgan und einer die Greifvorrichtungen von der angehobenen Glasscheibe lösenden Abstreifeinrichtung.

Eine Vorrichtung mit diesem Aufbau ist beispielsweise in der US-PS 3 610 393 beschrieben. Bei dieser bekannten Vorrichtung wirken die Tragorgane auf die untere Kante der auszuhängenden Glasscheibe ein. Diese bekannte Vorrichtung eignet sich daher nur zum automatischen Aushängen von Glasscheiben, deren untere Kante zumindest im wesentlichen horizontal verläuft.

Demgegenüber liegt der Erfindung die Aufgabe zugrunde, eine Vorrichtung der genannten Gattung zu schaffen, die sich zum automatischen Aushängen von Glasscheiben unterschiedlichster Gestalt und Form eignet, und die unabhängig von der Ausrichtung der unteren Kante der Glasscheibe universell einsetzbar ist.

Gemäss der Erfindung wird diese Aufgabe dadurch gelöst, dass das Tragorgan aus zwei einander gegenüber angeordneten, aufeinanderzu und voneinanderweg bewegbaren, auf die beiden Oberflächen der Glasscheibe einwirkenden und die Glasscheibe zwischen sich einspannenden Greifbacken besteht.

Durch die erfindungsgemässen Massnahmen wird erreicht, dass auch solche Glasscheiben, die bisher von Hand ausgehängt werden mussten, etwa Kraftfahrzeug-Seitenscheiben mit auf einer Seite spitz zulaufender Form, die zwangsläufig so in die Zangen eingehängt sind, dass die spitz zulaufende Seite nach unten weist, nunmehr automatisch ausgehängt werden können, weil die untere Kante nicht mehr zum Ergreifen der Glasscheibe dient. Das neue Tragorgan greift vielmehr an einer grundsätzlich beliebigen Stelle auf beide Oberflächen der Glasscheibe an, so dass die Vorrichtung Glasscheiben beliebiger Umfangsform automatisch aushängen kann. Dabei spielt es auch keine Rolle, ob es sich um plane oder gegebenenfalls um gebogene Glasscheiben handelt.

Nach einer ersten Ausführungsform sind die Greifbacken an den Kolbenstangen von hydraulisch oder pneumatisch beaufschlagbaren Druckzylindern angeordnet.

Die Greifbacken können auch an Halterungen angeordnet sein, die mechanisch betätigt werden. Des weiteren können die Halterungen für die Greifbacken so angeordnet sein, dass sie sich nach dem Ergreifen der Glasscheibe absenken und die Glasscheibe in senkrechter oder annähernd senkrechter Stellung auf ein die Glasscheiben in aufrechter Stellung transportierendes Förderband absetzen.

Nach einer anderen Ausführungsform sind die Greifbacken an gegeneinander verschwenkbaren Armen angeordnet. Diese die Greifbacken tragenden Arme können gemäss einer bevorzugten Ausführungsform an einer kippbaren Vorrichtung angeordnet sein, die es gestattet, die Glasscheiben in horizontaler Lage auf ein Förderband abzulegen. Insbesondere diese zuletzt genannte Ausführungsform erlaubt es, mehrere Glasscheiben durch mehrere nebeneinander angeordnete Greifvorrichtungen gleichzeitig auszuhängen und gleichzeitig auf einen Horizontalförderer abzulegen, von dem sie ggf. einem Fächerförderer mit aufrechter Stellung der Glasscheiben übergeben werden können.

Zweckmässige Ausgestaltungen und vorteilhafte Weiterbildungen der Erfindung sind Gegenstand der Unteransprüche.

Von den Zeichnungen zeigt:

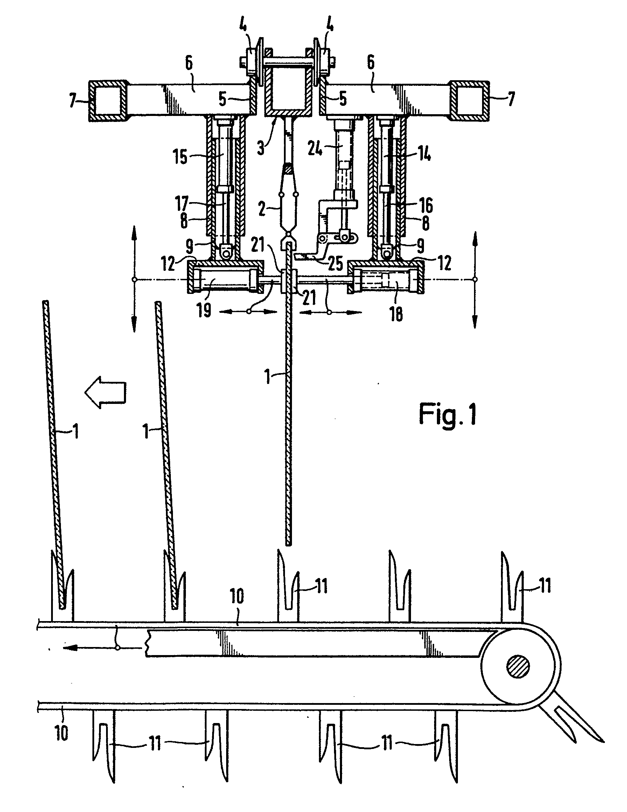

Fig. 1 eine erste Ausführungsform einer erfindungsgemässen Vorrichtung in einer Seitenansicht, teilweise im Schnitt;

Fig. 2 eine zweite, bevorzugte Ausführungsform der Erfindung zum gleichzeitigen Aushängen mehrerer Glasscheiben in einer Gesamtansicht;

Fig. 3 eine vergrösserte Detaildarstellung aus Fig. 2;

Fig. 4 den in Fig. 2 dargestellten Antrieb zum Verschwenken der Greifbacken in einer teilweise im vertikalen Schnitt dargestellten Seitenansicht;

Fig. 5 einen Teil der in Fig. 2 dargestellten Vorrichtung in einem Zeitpunkt nach dem Ergreifen der Glasscheibe und dem Abstreifen der Aufhängezangen;

Fig. 6 die in Fig. 2 dargestellte Vorrichtung im Augenblick des Ablegens der Glasscheiben auf ein Horizontalförderband, und

Fig. 7 die Übergabe der Glasscheiben von dem Horizontal-Förderband auf einen sich anschliessenden Fächer-Förderer.

Die Glasscheiben 1 hängen während ihrer Wärmebehandlung, beispielsweise zum Zweck des thermischen Vorspannens, an selbstklemmenden zangenförmigen Greifvorrichtungen 2, die sich unter der Wirkung des Eigengewichtes der Glasscheiben 1 schliessen. Die Greifvorrichtungen 2 sind an einem Transportwagen 3 aufgehängt, der auf Rädern 4 über Schienen 5 durch den Vorspannofen und durch die verschiedenen Bearbeitungsstationen läuft. Die Schienen 5 sind an Trägern 6 befestigt, die ihrerseits am Rahmen 7 angeordnet sind.

Die Glasscheiben 1 werden nach der Wärmebehandlung aus den Greifvorrichtungen 2 ausgehängt und in die auf dem Transportband 10 angeordneten gabelförmigen Halter 11 hineingestellt und mit dem Transportband 10 zur nächsten Bearbeitungsstation transportiert. Gewöhnlich dient der Förderer 10 zusätzlich dazu, die durch die Wärmebehandlung noch heissen Glasscheiben weiter abzukühlen.

An den Trägern 6 sind nach unten gerichtete Teleskop-Vierkantrohre 8, 9 angeordnet. Die Vierkantrohre 9 werden durch doppeltwirkende pneumatische Druckzylinder 14 bzw. 15 in vertikaler Richtung verschoben. Am Ende der Vierkantrohre 9 sind Halterungen 12 angeordnet, die jeweils einen horizontal ausgerichteten pneumatischen Druckzylinder 18 bzw. 19 tragen. An den Kolbenstangen dieser Druckzylinder 18, 19 sind Greifbacken 21 angeordnet, zwischen denen die Glasscheibe 1 gefasst wird.

Sobald die Greifbacken 21 die Glasscheibe 1 erfasst haben, werden die Zylinder 14, 15 beaufschlagt, um die Glasscheibe 1 etwas anzuheben und dadurch die Zangen 2 zu entlasten. Sodann wird durch eine Folgesteuerung der Zylinder 24 beaufschlagt, dessen Kolbenstange sich abwärts bewegt und dadurch den Winkelhebel 25 betätigt, der die Zangen 2 vollständig von der Glasscheibe löst. Anschliessend werden wieder die Zylinder 14, 15 betätigt, mit deren Hilfe nunmehr die Glasscheibe 1 in ihrer Ebene nach unten abgesenkt und in die gabelförmigen Halter 11 hineingestellt wird. Durch erneute Beaufschlagung der Zylinder 18, 19 werden nun die Greifbacken 21 zurückgezogen und die Glasscheibe 1 freigegeben. Die Zylinder 14, 15 bringen sodann die Greifbacken 21 in ihre Ausgangslage zurück, wo sie nach Einlaufen der nächsten Glasscheibe in die Aushängestation ihren Zyklus neu beginnen.

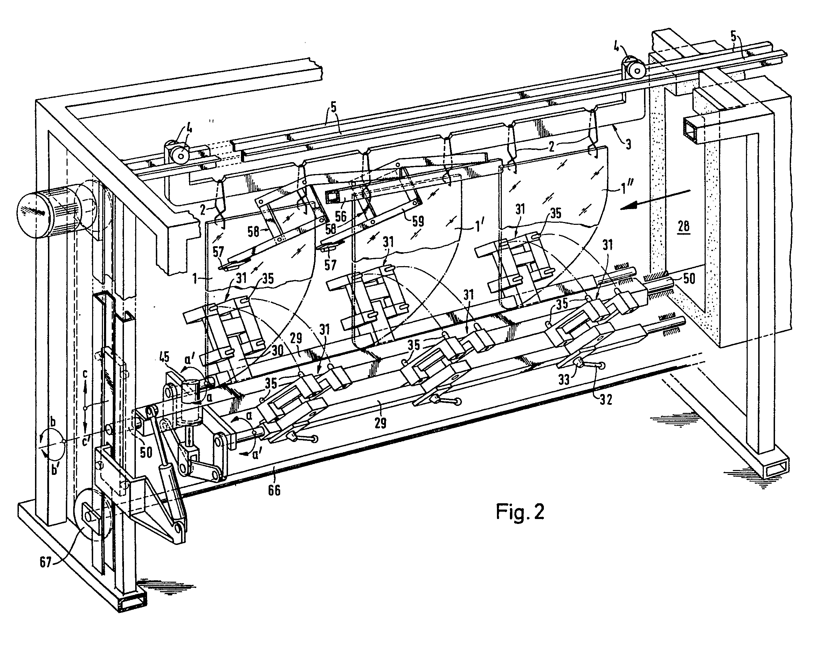

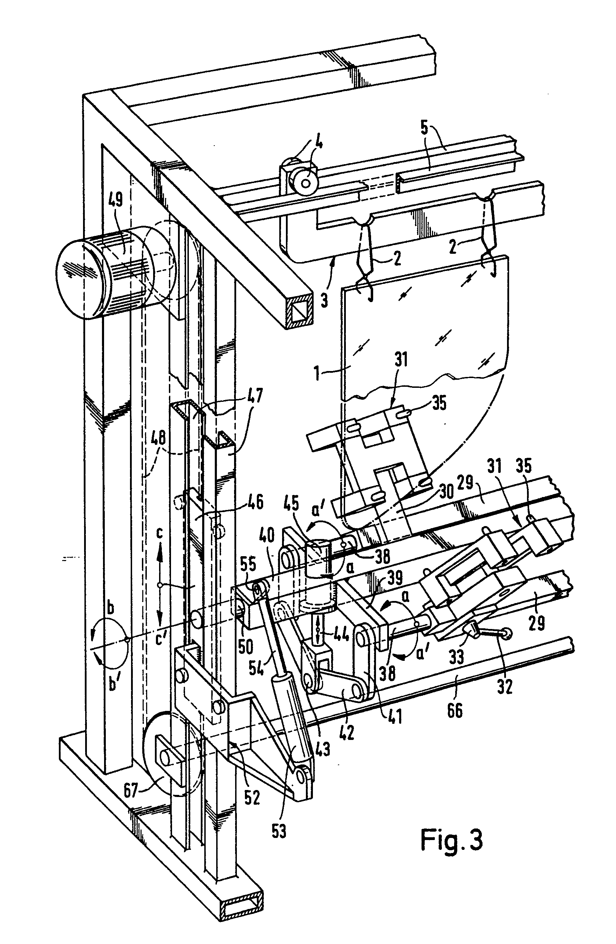

In den Fig. 2 bis 6 ist eine andere Ausführungsform der Erfindung dargestellt, die sich insbesondere zum gleichzeitigen Aushängen mehrerer Glasscheiben eignet. An dem Transportwagen 3, der wiederum auf Rädern 4 die Glasscheiben aus dem Ofen bzw. aus der Vorspannstation 28 in die Aushängestation bringt, sind nebeneinander drei Glasscheiben 1, 1' und 1'' mittels der zangenförmigen Greifvorrichtungen 2 aufgehängt. Eine solche «Mehrfachbehängung» eines Transportwagens empfiehlt sich insbesondere bei kleineren Glasscheiben zur besseren Kapazitätsausnutzung der Anlage. Die drei Glasscheiben werden in dem Vorspannaggregat 28 gleichzeitig vorgespannt.

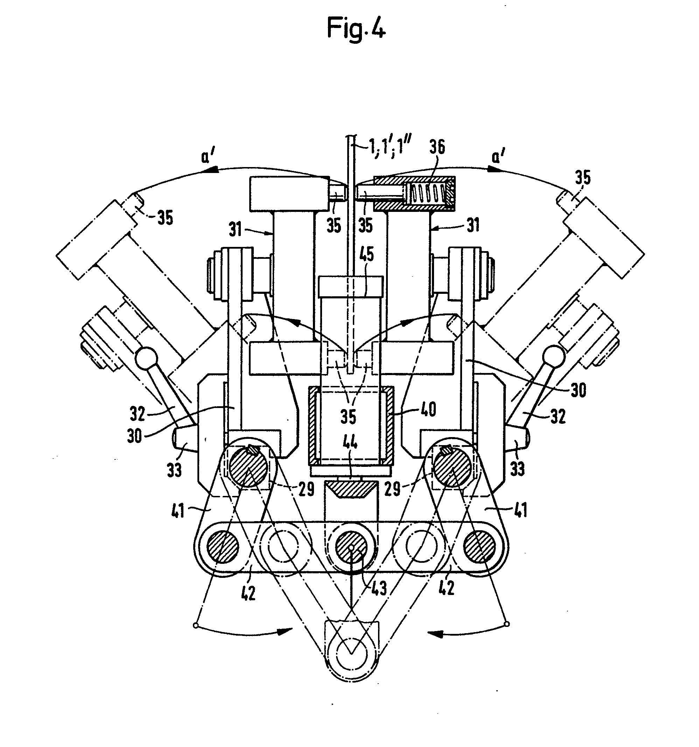

Etwas unterhalb der unteren Kanten der Glasscheiben sind zu beiden Seiten der Transportebene um ihre Längsachse drehbare Vierkantrohre 29 angeordnet, auf denen einander gegenüber Haltearme 30 angeordnet sind, die die Greifbacken 31 tragen. Die Greifbacken 31 sind längs der Vierkantrohre 29 verschiebbar gelagert. Sie lassen sich mit Hilfe der von Handgriffen 32 betätigten Schrauben 33 in der gewünschten Position auf dem Vierkantrohr 29 festklemmen. Jeder Greifbacken 31 weist vier Haltestifte 35 auf, die mit der Glasscheibe in Berührung kommen. Diese Haltestifte 35 bestehen aus einem Material, das die Glasoberfläche nicht beschädigt, beispielsweise aus Polytetrafluoräthylen. Um die von den Haltestiften 35 auf die Glasscheibe übertragenen Kräfte zu begrenzen, ist wenigstens einer der beiden jeweils zusammenwirkenden, d.h. gegenüberliegenden Haltestifte federnd, etwa unter Zwischenschaltung einer Wendelfeder 36, in den Greifbacken 31 gelagert, wie es im einzelnen aus Fig. 4 ersichtlich ist.

Die beiden Vierkantrohre 29 sind über die Lagerzapfen 38 in Richtung der Pfeile a-a' in den Konsolen 39 drehbar gelagert. Die Konsolen 39 sind an dem Holm 40 seitlich befestigt, der seinerseits über Drehzapfen 50 um seine Mittelachse verschwenkbar gelagert ist. Auf den Lagerzapfen 38 ist jeweils ein Hebel 41 drehfest angeordnet. An den Hebeln 41 ist jeweils ein Hebel 42 angelenkt. Beide Hebel 42 werden in dem gemeinsamen Drehpunkt 43 von der Kolbenstange 44 des Druckzylinders 45 betätigt. Der Antrieb 41 bis 45 für die Drehbewegung der Vierkantrohre 29 ist also in der Art eines Kniehebelantriebes ausgeführt, wodurch den Greifbacken 31 eine für diesen Zweck besonders günstige Bewegungscharakteristik erteilt wird.

Die Lagerzapfen 50 des den gesamten Greifmechanismus tragenden Holmes 40 sind in dem Schlitten 46 gelagert. Der Schlitten 46 ist in den beiden vertikalen Schienen 47 vertikal verschiebbar gelagert. Der Antrieb in vertikaler Richtung, d.h. in Richtung der Pfeile c-c', erfolgt über den Kettentrieb 48, der von dem Elektromotor 49 angetrieben wird. Auch am anderen Ende ist das Vierkantrohr 40 über einen Lagerzapfen 50 in einem nicht dargestellten vertikal verschiebbaren Schlitten gelagert, der ebenfalls von dem Motor 49 in die gewünschte Position gebracht wird. Zur Kraftübertragung auf diesen nicht dargestellten Schlitten dient die Welle 66, die über das Kettenrad 67 und den Kettentrieb 48 kinematisch mit dem Motor 49 verbunden ist.

An dem Schlitten 46 ist ferner der Lagerblock 52 angeordnet, an dessen Ende der doppeltwirkende Druckzylinder 53 angelenkt ist. Die Kolbenstange 54 ist über das Lager 55 an dem Holm 40 angelenkt. Mit Hilfe des Druckzylinders 53 kann die gesamte vertikal verschiebbare Greifvorrichtung um die Achse 50 zum Ablegen der Glasscheiben um 90° in Richtung der Pfeile b-b' verschwenkt werden.

Wenn der Transportwagen 3 mit den daran hängenden Glasscheiben in die Aushängestation eingelaufen ist, wird der Druckzylinder 45 betätigt, unter dessen Wirkung die Greifbacken 31 gegeneinander verschwenkt werden, so dass jedes Paar zusammenwirkender Greifbacken jeweils eine Glasscheibe zwischen sich einspannt. Durch Einschalten des Motors 49 werden die so festgehaltenen Glasscheiben um einige Zentimeter angehoben und dadurch die Greifvorrichtungen 2 entlastet.

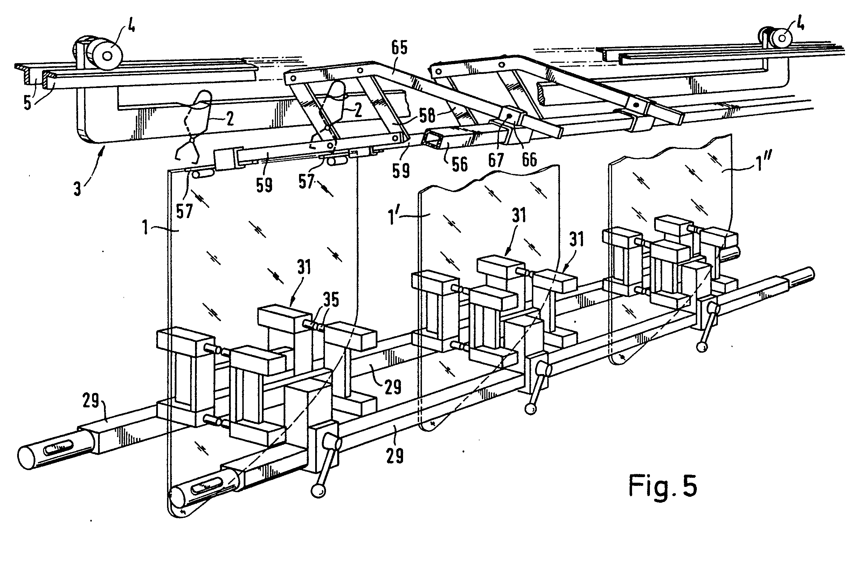

Wie insbesondere aus Fig. 5 hervorgeht, wird sodann das Vierkantrohr 56 durch einen nicht dargestellten Antrieb um etwa 45 Grad gedreht. Dadurch kommen die Abstreifer 57, die an dem Gelenkparallelogramm 58, 59, 65 angeordnet sind, in Kontakt mit der Glasscheibe, gleiten an dieser entlang nach oben und streifen die gewichtsentlasteten Greifzangen 2 von der Kante der Glasscheibe ab. Das Gelenkparallelogramm 58, 59, 65 sorgt dafür, dass der Abstreifer 57 sich mit einer geringen Kraft, die durch die Aufhängung des den Abstreifer 57 tragenden Armes 59 an den Hebeln 58 des Gelenkparallelogramms infolge des Eigengewichtes des Armes 59 bestimmt wird, sich gegen die Oberfläche der Glasscheibe legt. Dabei ist es möglich, die Kraft, mit der sich der Abstreifer 57 gegen die Oberfläche der Glasscheibe anlegt, dadurch zu ändern, dass der horizontale Abstand des Gelenkparallelogramms von der Glasscheibe verändert wird. Zu diesem Zweck ist der obere Hebel 65 des Gelenkparallelogramms in der Halterung 66 verschiebbar angeordnet, und kann an der gewünschten Stelle mit Hilfe der Schraube 67 festgeklemmt werden.

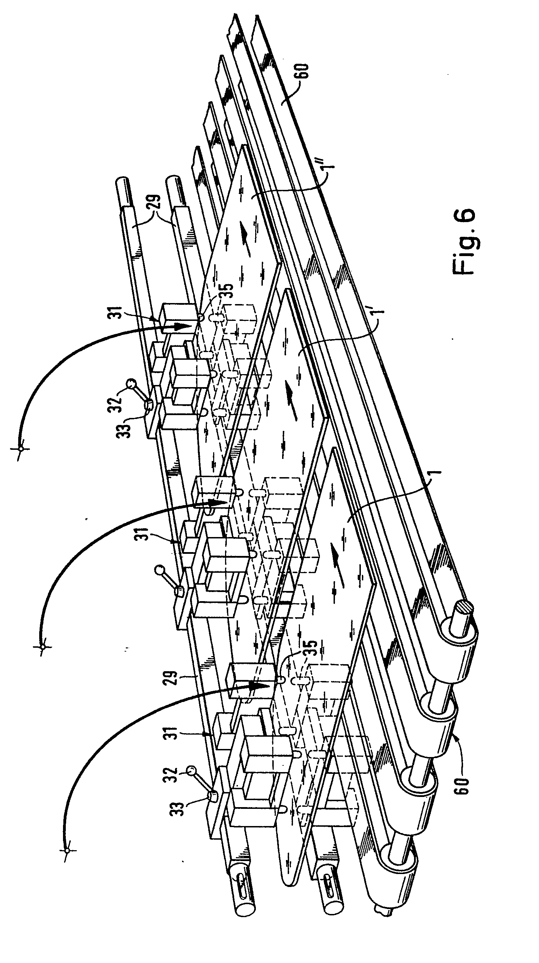

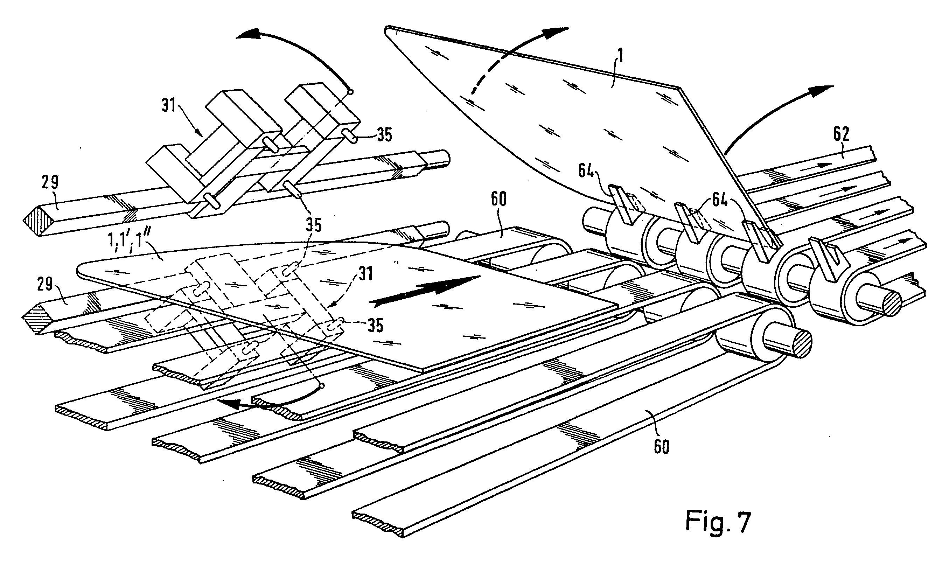

Durch Kippen der gesamten Vorrichtung um die Drehachse 50 mit Hilfe des Druckzylinders 53 werden die drei Glasscheiben gleichzeitig in die waagrechte Lage gebracht, wo sie auf einen horizontalen Riemenförderer 60 gleichzeitig abgelegt werden. Dieser Arbeitsschritt der Übergabe und des Weitertransportes ist in den Fig. 6 und 7 dargestellt. Die Glasscheiben 1'', 1' und 1 liegen nun auf dem Riemenförderer 60 in Transportrichtung gesehen hintereinander.

Der Antriebsmotor für den Riemenförderer 60 und der Antriebsmotor für den sich daran anschliessenden Fächerförderer 62, auf dem die Glasscheiben in den gabelförmigen Halterungen 64 in etwa aufrechter Stellung weitertransportiert werden, sind in bekannter Weise durch nicht dargestellte Endschalter so gesteuert und aufeinander abgestimmt, dass die Glasscheiben nacheinander von dem Fächerförderer übernommen werden. Sobald der Förderer 60 frei ist, kehren die Greifbacken 31 durch Betätigung des Druckzylinders 53 in ihre Ausgangslage zurück. Die Vorrichtung ist nun für den nächsten Zyklus bereit.

**Patentansprüche**

1. Vorrichtung an einer Wärmebehandlungsanlage für Glasscheiben zum automatischen Aushängen einer an unter Schwerkraftwirkung sich schliessenden zangenförmigen Greifvorrichtungen (2) vertikal aufgehängten heissen Glasscheibe aus den Greifvorrichtungen (2), mit einem die Glasscheibe anhebenden und auf eine Transportvorrichtung (10; 60) übergebenden Tragorgan, und einer die Greifvorrichtungen (2) von der angehobenen Glasscheibe lösenden Abstreifvorrichtung (25; 57), dadurch gekennzeichnet, dass das Tragorgan aus zwei einander gegenüber angeordneten, aufeinanderzu und voneinanderweg bewegbaren, auf die beiden Oberflächen der Glasscheibe einwirkenden und die Glasscheibe zwischen sich einspannenden Greifbacken (21; 31) besteht.

2. Vorrichtung nach Anspruch 1, dadurch gekennzeichnet, dass die Greifbacken (21) an den Kolbenstangen von hydraulisch oder pneumatisch beaufschlagten Druckzylindern (18, 19) angeordnet sind.

3. Vorrichtung nach Anspruch 1, dadurch gekennzeichnet, dass die Greifbacken (31) an verschwenkbaren Armen (30) angeordnet sind.

4. Vorrichtung nach Anspruch 3, dadurch gekennzeichnet, dass die die zusammenwirkenden Greifbacken (31) tragenden verschwenkbaren Arme (30) auf separaten, unterhalb des durch die untere Kante der Glasscheibe bestimmten Niveaus gelagerten Wellen (29) angeordnet sind.

5. Vorrichtung nach Anspruch 4, dadurch gekennzeichnet, dass die beiden die mit den Greifbacken (31) versehenen Arme (30) tragenden Wellen (29) gegenläufig (a-a') synchron antreibbar sind.

6. Vorrichtung nach Anspruch 5, dadurch gekennzeichnet, dass als Antrieb für die gegenläufig synchrone Drehbewegung der Wellen (29) ein von einem Druckzylinder (45) betätigtes Gelenkgetriebe (41, 42, 43) vorgesehen ist.

7. Vorrichtung nach Anspruch 1 bis 6, dadurch gekennzeichnet, dass die Greifbacken (21; 31) jeweils wenigstens zwei im Abstand voneinander angeordnete, auf die Glasoberfläche einwirkende Druckelemente (35) mit geringer Ausdehnung der Kontaktfläche aufweisen, wobei die Druckelemente der jeweils zusammenwirkenden Greifbacken einander gegenüber angeordnet sind.

8. Vorrichtung nach Anspruch 7, dadurch gekennzeichnet, dass die Druckelemente (35) die Form von Stiften aufweisen.

9. Vorrichtung nach Anspruch 7 oder 8, dadurch gekennzeichnet, dass von jeweils zwei zusammenwirkenden Druckelementen (35) wenigstens eines federnd nachgiebig gelagert ist.

10. Vorrichtung nach Anspruch 3 bis 9, dadurch gekennzeichnet, dass auf jeder Welle (29) mehrere mit Greifbacken (31) versehene Arme (30) zum gleichzeitigen Aushängen mehrerer in einer Ebene hängender Glasscheiben (1, 1', 1'') angeordnet sind.

11. Vorrichtung nach Anspruch 10, dadurch gekennzeichnet, dass die mit den Greifbacken (31) versehenen Arme (30) auf den sie tragenden Wellen (29) in verschiedener Position arretierbar angeordnet sind.

12. Vorrichtung nach Anspruch 3 bis 11, dadurch gekennzeichnet, dass die beiden die mit den Greifbacken (31) versehenen Arme (30) tragenden Wellen (29) an einem gemeinsamen Holm (40) gelagert sind, der zum Ablegen der Glasscheiben um eine horizontale Achse (50) verschwenkbar (b-b') ist.

13. Vorrichtung nach Anspruch 12, dadurch gekennzeichnet, dass der gemeinsame Holm (40) in vertikaler Richtung verschiebbar (c-c') gelagert ist.

14. Vorrichtung nach Anspruch 12 bis 13, dadurch gekennzeichnet, dass die Schwenkachse (50) des die beiden Wellen (29) tragenden gemeinsamen Holms (40) auf der Höhe eines die Glasscheiben (1, 1', 1'') übernehmenden Horizontalförderers (60) angeordnet ist.

15. Vorrichtung nach einem oder mehreren der Ansprüche 1 bis 14, dadurch gekennzeichnet, dass die die Greifvorrichtungen (2) von der Glasscheibe lösende Abstreifeinrichtung (57) über ein Gelenkparallelogramm (58, 59, 65) an einer verschwenkbaren Welle (56) angeordnet ist.

16. Vorrichtung nach Anspruch 15, dadurch gekennzeichnet, dass der Arm (65) des Gelenkparallelogramms in seiner Halterung (66) auf der verschwenkbaren Welle (56) verschiebbar gelagert und an beliebiger Stelle festlegbar ist.

## Claims

1. An apparatus in a heat treating system for glass sheets, for automatically taking a glass sheet from gripping parts (2) gripping the glass automatically under the effect of gravity and supporting the sheeting in an upright position, with a support part for lifting the glass sheet and handing it over to a transport system (10; 60) and a clearing system (25; 57) for moving the gripping parts (2) clear of the lifted glass sheet, characterized in that the support part is made up of two oppositely placed gripping heads (21; 31) able to be moved towards and away from each other and taking effect on the two sides of the glass for gripping the same between them.

2. An apparatus as claimed in claim 1, characterized in that the gripping heads (21) are placed on the piston rods of liquid- or air-powered pressure cylinders (18, 19).

3. An apparatus as claimed in claim 1, characterized in that the gripping heads (31) are placed on turning arms (30).

4. An apparatus as claimed in claim 3, characterized in that the turning arms (30), supporting the gripping heads (31) used with each other, are placed on separate shafts (29) lower than the level of the lower edge of the glass sheet.

5. An apparatus as claimed in claim 4, characterized in that the two shafts (29) supporting the arms (30) having the gripping heads (31) may be turned in step with each other and in opposite directions (a-a').

6. An apparatus as claimed in claim 5, characterized in that as a driving system for causing opposite in-step turning of the shafts (29) use is made of a jointed lever system (41, 42, 43) worked by a pressure cylinder (45).

7. An apparatus as claimed in anyone of claims 1 to 6, characterized in that the gripping heads (21; 31) in each case have at least two spaced pressure parts (35) acting on the side of the glass, with a small size of the contact face, and the pressure parts of the two gripping heads are opposite each other.

8. An apparatus as claimed in claim 7, characterized in that the pressure parts (35) are pins.

9. An apparatus as claimed in claim 7 or claim 8, characterized in that of two pressure parts (35) used with each other in each case, at least one is able springingly to give way.

10. An apparatus as claimed in anyone of claims 3 to 9, characterized in that on each shaft (29) there is a number of arms (30), having gripping heads (31), for taking a number of glass sheets (1, 1', 1''), hanging in a single plane, at a same time.

11. An apparatus as claimed in claim 10, characterized in that the arms (30) having the gripping heads (31) are so placed on the shafts (29) supporting them so that they may be locked in different positions.

12. An apparatus as claimed in anyone of claims 3 to 11, characterized in that the two shafts (29) are supported on a common beam (40) which may be turned about a horizontal axis (50, b-b') for putting down the glass sheets.

13. An apparatus as claimed in claim 12, characterized in that the common beam (40) may be moved in an upright direction (c-c').

14. An apparatus as claimed in claim 12 or claim 13, characterized in that the axis (50) of turning of the common beam (40) supporting the two shafts is placed at the same level as a horizontal transporter (60) to which the glass sheets (1, 1', 1'') are handed over.

15. An apparatus as claimed in anyone or more of claims 1 to 14, characterized in that the clearing system (57) undoing the gripping parts (2) from the glass sheet is placed on a turning shaft (56) using a jointed parallelogram (58, 59, 65).

16. An apparatus as claimed in claim 15, characterized in that the arm (65) of the jointed parallelogram may be changed in position in its support (66) on the turning shaft (56) and may be fixed at any desired point.

## Revendications

1. Dispositif, dans une installation de traitement thermique de feuilles de verre, pour décrocher automatiquement une feuille de verre chaude suspendue verticalement à des dispositifs de préhension en forme de pinces (2) qui se ferment par gravité, comportant un organe de suspension soulevant la feuille de verre et la transférant sur un dispositif de transport (10, 60) et un dispositif arracheur (25, 57) débarrassant les dispositifs de préhension (2) de la feuille de verre soulevée, caractérisé en ce que l'organe de suspension est formé de deux mâchoires de préhension (21, 31) opposées l'une à l'autre, mobiles l'une vers l'autre et l'une à partir de l'autre, agissant sur les deux surfaces de la feuille de verre et serrant la feuille de verre entre elles.

2. Dispositif suivant la revendication 1, caractérisé en ce que les mâchoires de préhension (21) sont montées sur les tiges de piston de vérins hydrauliques ou pneumatiques (18, 19).

3. Dispositif suivant la revendication 1, caractérisé en ce que les mâchoires de préhension (31) sont montées sur des bras (30) qui peuvent pivoter.

4. Dispositif suivant la revendication 3, caractérisé en ce que les bras pivotants (30) qui supportent les mâchoires de préhension (31) coopérantes sont montés sur des arbres séparés (29) tourillonnant en dessous du niveau déterminé par le bord inférieur de la feuille de verre.

5. Dispositif suivant la revendication 4, caractérisé en ce que les deux arbres (29) portant les bras (30) pourvus des mâchoires des préhension (31) peuvent être entraînés de manière synchrone en sens opposé (a-a').

6. Dispositif suivant la revendication 5, caractérisé en ce qu'un mécanisme d'articulation (41, 42, 43) actionné par un vérin (45) est prévu comme mécanisme d'entraînement pour les mouvements de rotation synchrones et opposés des arbres (29).

7. Dispositif suivant les revendications 1 à 6, caractérisé en ce que les mâchoires des préhension (21, 31) présentent chacune au moins deux éléments de pression (35) à faible dilatation de la surface de contact qui agissent sur la surface du verre et qui sont espacés l'un de l'autre, les éléments de pression des mâchoires de préhension coopérantes étant toujours disposés les uns en face des autres.

8. Dispositif suivant la revendication 7, caractrisé en ce que les éléments de pression (35) ont la forme de tenons.

9. Dispositif suivant la revendication 7 ou 8, caractérisé en ce qu'au moins un de deux éléments de pression (35) coopérants est chaque fois monté élastiquement sur ressort.

10. Dispositif suivant les revendications 3 à 9, caractérisé en ce que plusieurs bras (30) pourvus de mâchoires de préhension (31) sont montés sur chaque arbre (29) pour décrocher simultanément plusieurs feuilles de verre (1, 1', 1") suspendues dans un plan.

11. Dispositif suivant la revendication 10, caractérisé en ce que les bras (30) pourvus des mâchoires de préhension (31) sont montés sur les arbres de support (29) de manière à pouvoir être immobilisés dans diverses positions.

12. Dispositif suivant les revendications 3 à 11, caractérisé en ce que les deux arbres (29) portant les bras (30) pourvus des mâchoires de préhension (31) sont montés sur une barre commune (40) qui peut pivoter (b-b') autour d'un axe horizontal (50) pour déposer les feuilles de verre.

13. Dispositif suivant la revendication 12, caractérisé en ce que la barre commune (40) est montée déplaçable dans le sens vertical (c-c').

14. Dispositif suivant les revendications 12 et 13, caractérisé en ce que l'axe de pivotement (50) de la barre commune (40) portant les deux arbres (29) est disposé au niveau d'un transporteur horizontal (60) recevant les feuilles de verre (1, 1', 1").

15. Dispositif suivant l'une quelconque des revendications 1 à 14, caractérisé en ce que le dispositif arracheur (47) qui débarrasse les dispositifs de préhension (2) de la feuille de verre est monté par l'intermédiaire d'un parallélogramme déformable (58, 59, 65) sur un arbre (56) qui peut pivoter.

16. Dispositif suivant la revendication 15, caractérisé en ce que le bras (65) du parallélogramme déformable est monté déplaçable dans son support (66) sur l'arbre (56) peut pivoter et peut être immobilisé à l'endroit souhaité sur celui-ci.

Fig. 1

Fig. 2

0 005 860

Fig. 3

# Fig.4

Fig. 5

Fig. 6

Fig. 7

0 005 860